# EUROPEAN PATENT SPECIFICATION

(11) **EP 4 350 464 B1**
(45) Date of publication and mention of the grant of the patent: **09.07.2025**
(21) Application number: 22212871.2
(22) Date of filing: 12.12.2022
(51) Int. Cl.: G05D 7/01

(54) **FLOW REGULATING DEVICE FOR REGULATING A FLUID FLOW THERETHROUGH**
DURCHFLUSSREGELVORRICHTUNG ZUR DURCHFLUSSREGELUNG
DISPOSITIF DE RÉGULATION DE DÉBIT POUR RÉGULER UN ÉCOULEMENT DE FLUIDE À TRAVERS CELUI-CI

(30) Priority: 04.10.2022 IN 202221057018
(43) Date of publication of application: 10.04.2024
(73) Proprietor: Cenergist Limited, Washington NE37 2SH (GB)
(72) Inventor: Sankar, Sandip, 711103 Howrah (IN)
(74) Representative: Arnold & Siedsma

(56) References cited:
- BE-A- 540 965
- US-A1- 2012 180 875
- US-A1- 2022 252 168
- US-A1- 2022 275 875

## Description

The present invention relates to a flow regulating device for regulating a fluid flow therethrough.

The invention further relates to a kit of parts, an irrigation system and a method of regulating a flow of fluid.

Water is a scarce resource in many regions of the world and thus needs to be efficiently used and its supply carefully regulated and controlled. For instance, in the Western world a great deal of clean drinking water is wasted by individuals in taking a bath or shower. Despite the fact that many measures have been taken in Western countries, the amount of energy involved in a shower or bath has continued to increase relatively.

Pressure-independent flow regulators or limiters are marketed very successfully by applicant, particularly in the United Kingdom and other countries. Such flow limiters are for instance described in EP 1.131.687 A and the Netherlands patent application no. 1010592.

US 2022/252168 A1 discloses a fluid flow regulator comprising a valve chamber having a fluid inlet and a fluid outlet. There is a valve member inside the valve chamber. The valve member is moveable inside the valve chamber and contactable with a valve seat of the flow regulator inside the valve chamber. The fluid flow regulator includes a check valve.

Compared to flow limiters of other manufacturers, which usually make use of rubber rings and the like, a considerable improvement is obtained with these known flow limiters, this being due to the ability of these known flow limiters of applicant to provide over a period of years an accurate flow rate of for instance 7.8 (+/- 0.1) litres per minute within a (dynamic) pressure interval of 2.5-10 bar. Existing flow limiters of other manufacturers appear in practice to generate a much less constant and accurate flow rate, particularly in the case of pressure loss (pressure drop), this being particularly undesirable in the case of showers and the like and with the aim of comfortable use of water.

There is also a need in agricultural sector for flow limiters, for instance in irrigation installations. Savings in the costs of installations are hereby considerable. Generally, there is a need for a flow regulating device which operates in a broad field of use.

This goal, amongst other goals, is met by a flow regulating device according to claim 1. More specifically, this goal is met by a flow regulating device for regulating a fluid flow therethrough, comprising a fluid inlet for fluid to flow into the flow regulating device, a fluid outlet for the fluid to flow out of the flow regulating device, and a fluid channel extending from the fluid inlet to the fluid outlet, wherein the flow regulating device further comprises:
- a flow regulating element provided with a regulator inlet and arranged in the fluid channel to regulate a flow rate of the fluid flowing through the fluid outlet;
- a pressure enhancing device arranged to increase the pressure of the fluid in the regulator inlet relative to the pressure of the fluid flowing through the fluid inlet.

By arranging the pressure enhancing device to increase the inlet pressure, a flow regulating element for providing an accurate flow rate at an operating pressure in a particular range can be operated in lower pressure applications and, as such, in a broad field of use.

It was found that although flow regulating elements, for instance those as referred to in the introduction, operate well under normal conditions, i.e., output a substantially constant flow rate under varying pressures, the operation can be improved in lower pressure ranges. As such, by providing a pressure enhancing device, a lower inlet pressure can be enhanced, i.e., increased to an inlet pressure within the optimal working pressure range of the flow regulating element.

According to a preferred embodiment, the pressure enhancing device comprises a tubular member having an inlet end and an outlet end having a cross-sectional area exceeding the cross-sectional area of the inlet end, wherein the flow regulating element is fluidly connected with the outlet end of the tubular member. An efficient, robust and reliable pressure enhancer is thus provided. Moreover, the tubular member can passively enhance the inlet pressure of the flow regulating element.

Preferably, the cross-sectional area of the tubular member smoothly increases along the tubular member as seen from the fluid inlet to the regulator inlet. A non-turbulent flow is thus obtained, which increases the reliability of the downstream flow regulating element.

According to a preferred embodiment, the pressure enhancing device is arranged to increase the pressure of the fluid in the regulator inlet by at least 25 percent, preferably at least 50 percent, relative to the pressure of the fluid flowing through the fluid inlet.

Preferably, the pressure enhancing device is arranged for increasing a fluid pressure of 1.0-1.4 bar in the fluid inlet to at least 1.8 bar in the regulator inlet, more preferably of 1.2 bar in the fluid inlet to 2 bar in the regulator inlet.

The flow regulating device further comprises a housing for housing the flow regulating element and the flow regulator. The housing may comprise an inlet and an outlet, arranged to fluidly couple to the inlet of the pressure enhancing device and the outlet of the flow regulating element. Preferably, the housing is tubular, making it efficient to couple the housing in a liquid ducts, such as water piping or hoses. The housing, or the flow regulating device in general, is preferably provided with suitable coupling means, for instance threading or operating by a snap-fit connection, to couple to a liquid duct system.

The housing comprises an inlet segment, and preferably a regulator segment and an outlet segment. The pressure enhancing device is arranged in the inlet segment. Preferably, the flow regulating element is arranged in the regulator segment, and the outlet segment defines the fluid outlet.

Preferably, the inner diameter of the tubular housing varies stepwise across the segments. This allows efficient fitting of the components. The flow regulating element is preferably snugly, i.e., without substantial play, arranged in the flow regulator segment of the tubular housing and preferably has an outer diameter exceeding the inner diameter of the outlet segment of the tubular housing. Preferably, the pressure enhancing device is snugly arranged in the inlet segment of the tubular housing and preferably has an outer diameter exceeding the inner diameter of the regulator segment. The steps between the segments, i.e., the change of diameter of the segments as mentioned above, may serve to accurately place the components in the housing by receiving an end face of these components. Preferably, the tubular housing and/or the pressure enhancing device is manufactured via an additive manufacturing technique.

The housing, the pressure enhancer and the flow limiting element are preferably separate parts which are received in the housing. In the alternative, at least some of the components may be formed integrally. The pressure enhancer, for instance in the form of the tubular member as explained above, may be formed integrally with the housing. A flow regulating element can also be fitted into the housing. As a further alternative, also the flow limiting element may be formed integrally or the flow limiting element may be integrally provided with a pressure enhancer as described.

According to a preferred embodiment, the flow regulating element defines a throughflow opening and is arranged to adjust the size of the throughflow opening in dependence of a pressure of the fluid flowing through the flow regulating element to regulate the flow rate of the fluid flowing through the fluid outlet. Typically, such a flow regulating element has an optimal working range in terms of inlet pressures, wherein the pressure enhancer is preferably arranged to enhance an inlet pressure to within said optimal working range.

Preferably, the flow regulating element comprises a valve seat and a resilient plate-like valve element defining the throughflow opening therebetween, wherein the valve element is arranged movable to and from the valve seat under the influence of the pressure of the fluid flowing through the flow regulating element to adjust the size of the throughflow opening.

The flow limiting element, or simply flow limiter, works by restricting the throughflow opening between the resilient plate-like valve element and the valve seat when the pressure increases. Such an increased pressure will act on the upstream side of the resilient plate-like valve element whereby it will bend, such that the resilient plate-like valve element moves towards the valve seat, whereby the throughflow opening is reduced and the flow is limited, or at least kept substantially constant with increasing pressure. Such a flow limiting element is described in EP 1.131.687 A and the Netherlands patent application no. 1010592.

According to a preferred embodiment, the flow regulating element is arranged to regulate the fluid flowing through the fluid outlet to flow at a predefined flow rate, preferably substantially independent of the inlet pressure. Preferably, the predefined flow rate is in the range of 5 to 15, more preferably 7 to 9, litres per minute.

According to a further aspect, a pressure enhancing device, in particular for use in a flow regulating device according to any of the above embodiments, is provided. A preferred embodiment comprises a tubular member having an inlet end for defining a fluid inlet, and an outlet end having a cross-sectional area exceeding the cross-sectional area of the inlet end to increase the pressure of a fluid flowing through the outlet end relative to the pressure of the fluid flowing through the fluid inlet.

Preferably, the cross-sectional area of the tubular member smoothly increases along the tubular member as seen from the inlet end to the outlet end.

Preferably, the cross-sectional area of the outlet end is at least 4, more preferably at least 5, times the cross-sectional area of the inlet end.

Preferably, the tubular member is manufactured via an additive manufacturing technique. The pressure enhancer may be provided with a housing, more preferably integrally, as described above. In the alternative, the pressure enhancer is arranged to cooperate with the housing as separate constructional elements.

According to a further aspect, a kit of parts according to claim 10 is provided.

According to a further aspect, a liquid duct system, for instance a water piping system or water duct system, is provided with at least one flow regulating device as described above. Such a system is then capable of providing a substantially constant flow rate, irrespective of the inlet pressures. In particular in irrigation systems, great water savings can be achieved. As such, according to a further aspect, an irrigation system is provided comprising at least one flow regulating device as described above.

According to a further aspect, this goal is met by a method of regulating a flow of fluid, comprising the steps of providing a flow regulating device, preferably as discussed above, and arranging the flow regulating device for the fluid to flow into the fluid inlet of the flow regulating device and out of the fluid outlet of the flow regulating device.

The present invention is further illustrated by the following Figures, which show preferred embodiments of the flow limiting device and components, and are not intended to limit the scope of the invention in any way, wherein:
- Figure 1 shows a flow regulating device;
- Figure 2 shows the flow regulating device in cross-section;
- Figure 3 shows a pressure enhancer in cross-section;
- Figure 4 show a tubular housing in cross-section, and;
- Figure 5 shows a cross-sectional view of a flow limiting element as used in the flow limiting device.

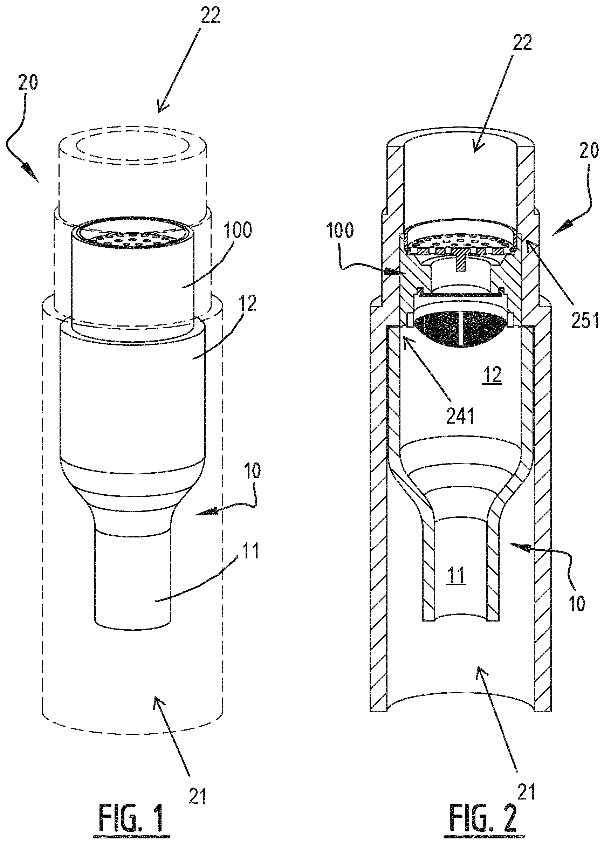

Figures 1 and 2 show a flow regulating assembly 1 for regulating a fluid flow therethrough, comprising a tubular housing 20 (illustrated by dashed lines), provided with an inlet 21 and an outlet 22, and a flow regulating element 100 arranged in the housing 20 to regulate a flow rate of fluid flowing therethrough.

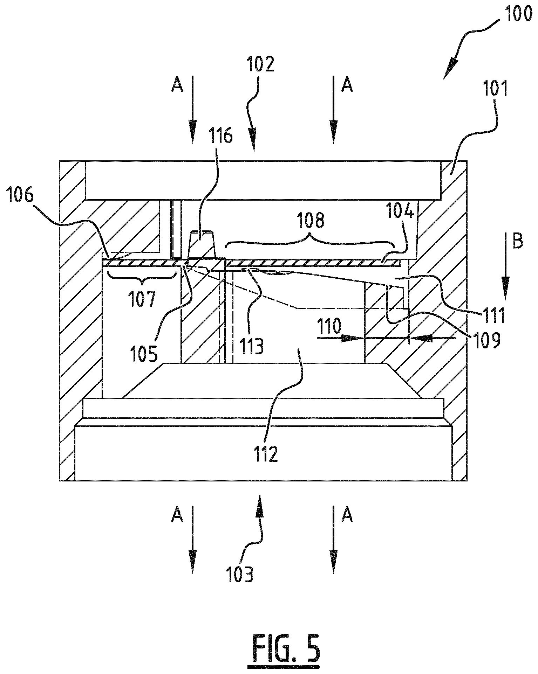

The flow regulating element is illustrated in more detail in Figure 5, which shows a cross-sectional view of the flow limiting element 100 according to a first embodiment. The flow regulator 100 comprises a regulator housing 101 which has, as a regulator inlet 102, a fluid opening on the upstream side and, as a regulator outlet 103, a fluid opening on the downstream side. The direction of flow is indicated by the different arrows A and is in the direction as seen from the inlet 102 to the outlet 103. Within the housing 101, a resilient plate-like valve element 104 is arranged, comprising a retained section 107 and a resiliently movable section 108. The plate-like resilient valve element 104 is supported on a support part 105 in the central downstream part of housing 101, wherein said support part 105 and a cushion part 106 in the peripheral upstream part of housing 101 hold in place the retained section 107 of resilient plate-like valve element 104. This fixation is brought about as follows. The resilient valve element 104 in principle lies unattached in housing 101 and is supported on one side over the whole width by support part 105 and held in place by a pin 116 on support part 105 which fits loosely in a hole arranged in resilient element 104. Both sides, i.e. the smaller retained section 107 and the larger resilient section 108 of the resilient element are exposed to the water pressure and a force is therefore exerted on both sides. The outer end of retained section 117 on the opposite side of resilient valve element 104 rests against cushion 106, whereby the resilient valve element 104 is fixed in its position by the flow of the liquid. The size of the throughflow opening 111 can be adjusted in the rest state of valve element 104 by adjusting the thickness of cushion 106. The resilient section 108 of plate-like valve element 4 determines, together with a valve seat 109 with thickness 110 inclining downward to the outer end of resilient part 8, the width and length of the throughflow opening 111, wherein said opening 111, together with the space 112 lying on the liquid outlet side of resilient element 104, realizes a pressure drop such that the liquid flow rate at the outlet 103 is constant.

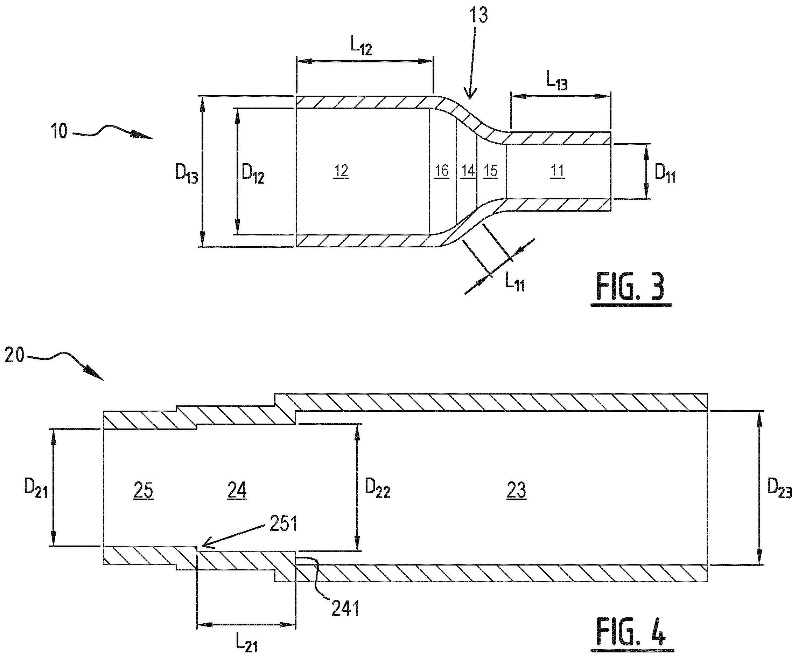

As shown in Figures 1 and 2, the assembly 1 further comprises a pressure enhancing device in the form of a tubular member 10. With reference to Figure 3, the tubular member 10 has an inlet end 11 with a constant inner diameter D₁₁ along its length L₁₃ and an outlet end 12 with a constant outer diameter D₁₃ and a constant inner diameter D₁₂ along its length L₁₂. The inner diameter D₁₂ of the outlet end 12 exceeds the inner diameter D₁₁ of the inlet end 11. From the inlet end 11 to the outlet end 12, the inner diameter of the tubular member 10 smoothly increases along a midsection 13 of the tubular member 10. Along a central cross-sectional region 14 of the midsection 13 with a length denoted as L₁₁, the diameter increase rate is substantially constant, while neighbouring curved regions 15, 16 of the midsection 13 at either side of the central region 14, smoothly connect the central region 14 to the inlet end 11 and the outlet end 12, respectively. As such, the tubular member 10 is arranged to increase the pressure of a fluid flowing therethrough by more than 25 percent, specifically from 1.2 bar in the inlet end 11 to 2 bar in the outlet end 12.

According to a specific embodiment of the pressure enhancer 10, the inner diameter D₁₁ of the inlet end 11 is between 5 and 15 mm, specifically 9 mm, while the inner diameter D₁₂ of the outlet end 12 is between 10 and 30 mm, specifically 21 mm. More generally, the inner diameter D₁₂ of the outlet end 12 is preferably about twice the inner diameter D₁₁ of the inlet end 11. The length L₁₃ of the inlet end 11 may be between 10 and 20 mm, specifically 17 mm, while the length L₁₂ of the outlet end 12 may be between 10 and 30 mm, specifically 23 mm. The central region 14 has a length L₁₁ of between 1 and 10 mm, specifically 4 mm, and extends at an angle with the inlet end 11 of between 110 and 170 degrees, preferably between 130 and 150 degrees, specifically 142 degrees. The curved regions 15, 16 of the midsection 13, connecting the central region 14 with the inlet end 11 and the outlet end 12, each have a radius of curvature of between 5 and 15 mm, specifically 8 mm and 7 mm respectively. Along its length, the tubular member 10 has a wall thickness of about 4 mm.

The diameter of the tubular housing 20 varies stepwise over its length, thereby defining in order of decreasing diameter, with reference to Figure 4, an inlet segment 23 with a first inner diameter D₂₃, a midsegment 24 with a length L₂₁ and a second inner diameter D₂₂, and an outlet segment 25 with a third inner diameter D₂₁. Referring again to Figures 1 and 2, the pressure enhancer 10 having an outer diameter D₁₃ corresponding to the first inner diameter D₂₃ is snugly held in the inlet segment 23, with its outlet end 12 abutting a shoulder 241 of the midsegment 24. Similarly, the flow regulating element 100, having an outer diameter and a length corresponding to the second inner diameter D₂₂ and the length L₂₁ of the midsegment 24, is snugly held in the midsegment 24, with its outlet 103 abutting a shoulder 251 of the outlet segment 25. When the inner diameter D₁₂ of the outlet end 12 of the tubular pressure enhancer 10 is slightly smaller than the outer diameter of the flow regulating element 100, the flow regulating element 100 can be secured between the outlet end 12 of the pressure enhancer 10 and the shoulder 251 of the outlet segment 25 of the housing 20 for an efficient assembly of the assembly 1. In general, the assembly 1 can be conveniently assembled by first inserting the flow regulating element 100 into the housing 20 via the inlet 21 and installing the inserted regulator 100 in the midsegment 24 of the housing 20 and, lastly, installing the pressure enhancer 10 in the inlet segment 23 via the inlet 21. The housing 20 therewith functions as a holding jacket.

According to a specific embodiment of the tubular housing 20, the inner diameter D₂₃ of the inlet segment 23 is between 10 and 50 mm, specifically 25 mm. The inner diameter D₂₂ of the midsegment 24 is between 10 and 40 mm, specifically 21 mm. The inner diameter D₂₁ of the outlet segment 25 is between 10 and 30 mm, specifically 19 mm. The length L₂₁ of the midsegment 24 is between 10 and 30 mm, specifically 16 mm.

The flow regulating assembly 1 can be installed in a water installation, particularly a tubing system thereof (not shown), to keep the flow rate of water flowing therethrough constant, e.g. at a rate of 7.8 lpm. Hereto, the inlet end 11 of the pressure enhancer 10 and the outlet 22 are fluidly connected to respective tubes of the system. The flow regulating element 100 has shown to optimally operate at higher pressures, in particular pressures of above 2 bar. For applications of the flow regulating element 100 in a lower operating pressure range, it was found that the flow rate ultimately falls below the desired flow rate. By retrofitting the pressure enhancer 10, a relatively low inlet pressure of, e.g., 1-1.2 bar can be increased to, e.g., 2 bar, such that the flow regulating element 100 can operate within its optimal pressure range.

The modular configuration of the assembly 1 allows the retrofitted pressure enhancer 10 to be replaced, depending on the specific flow limiting element 100 and its application, flow rate and optimal operating pressure range.

A series of experiments have been performed, wherein the inlet pressure has been varied using a low-pressure range pump from the initial condition of 1.2 bar to 2.5 bar at several increments and the resulting flow rate has been measured at each pressure.

**Test 1 includes starting from a minimum pressure of 50kPa, and increasing with 50kPa intervals to a maximum pressure of 500kPa. The flow rate results are given in Table 1:**

| **Run. No.** | **Pressure (in bar)** | **Average flow rate in LPM (Litres per minute)** | **No. of experiments** |
|---|---|---|---|
| 1 | 1.2 | 7.2 | 5 |
| 2 | 1.25 | 7.5 | 5 |
| 3 | 1.3 | 7.8 | 5 |
| 4 | 1.4 | 7.8 | 5 |
| 5 | 1.6 | 7.8 | 5 |
| 6 | 1.7 | 7.8 | 5 |
| 7 | 1.8 | 7.8 | 5 |
| 8 | 1.9 | 7.8 | 5 |
| 9 | 2 | 7.8 | 5 |
| 10 | 2.5 | 7.8 | 5 |
| 11 | 3 | 7.8 | 5 |

**Test 2 includes determining the flow rate at the same pressures, but this time decreasing from 500kPa. The results are given in Table 2:**

| **Run. No.** | **Pressure (in bar)** | **Average flow rate in LPM (Litres per minute)** | **No. of experiments** |
|---|---|---|---|
| 1 | 3 | 7.8 | 5 |
| 2 | 2.5 | 7.8 | 5 |
| 3 | 2 | 7.8 | 5 |
| 4 | 1.9 | 7.8 | 5 |
| 5 | 1.8 | 7.8 | 5 |
| 6 | 1.7 | 7.8 | 5 |
| 7 | 1.6 | 7.8 | 5 |
| 8 | 1.4 | 7.8 | 5 |
| 9 | 1.3 | 7.8 | 5 |
| 10 | 1.25 | 7.5 | 5 |
| 11 | 1.2 | 7.2 | 5 |

The tests have been repeated for each situation as detailed in Table 1 and Table 2. Accordingly, a total of 110 experiments have been performed.

**The inlet pressures of the flow regulating device, the resulting flow rates at those pressures, and the differences with the optimal flow rate of 7.8 lpm are given in Table 3.**

| **Pressure (bar)** | **Flow rate (LPM)** | **Difference of flow rate** | **No. of experiments** |
|---|---|---|---|
| 1.2 | 7.2 | J.6 | 5 |
| 1.25 | 7.5 | J.3 | 5 |
| 1.3 | 7.8 | 0 | 5 |
| 1.4 | 7.8 | 0 | 5 |
| 1.6 | 7.8 | 0 | 5 |
| 1.7 | 7.8 | 0 | 5 |
| 1.8 | 7.8 | 0 | 5 |
| 1.9 | 7.8 | 0 | 5 |
| 2 | 7.8 | 0 | 5 |
| 2.5 | 7.8 | 0 | 5 |
| 3 | 7.8 | 0 | 5 |

The experiments show that the flow regulating device is effective even at relatively low inlet pressures.

The present invention is not limited to the embodiment shown, but extends also to other embodiments falling within the scope of the appended claims.

## Claims

1. Flow regulating device (1) for regulating a fluid flow therethrough, comprising a fluid inlet (11) for fluid to flow into the flow regulating device, a fluid outlet (22) for the fluid to flow out of the flow regulating device, and a fluid channel extending from the fluid inlet (11) to the fluid outlet (22), wherein the flow regulating device (1) further comprises:
- a flow regulating element (100) provided with a regulator inlet (102) and arranged in the fluid channel to regulate a flow rate of the fluid flowing through the fluid outlet (22);
- a housing (20) for housing the flow regulating element (100), wherein the housing comprises an inlet segment (23),
**characterised by** a pressure enhancing device (10) arranged in the inlet segment (23) to increase the pressure of the fluid in the regulator inlet (102) relative to the pressure of the fluid flowing through the fluid inlet (11).

2. Flow regulating device according to claim 1, wherein the pressure enhancing device comprises a tubular member (10) having an inlet end (11) and an outlet end (12) having a cross-sectional area exceeding the cross-sectional area of the inlet end (11), wherein the flow regulating element (100) is fluidly connected with the outlet end (12) of the tubular member (10).

3. Flow regulating device according to claim 2, wherein the cross-sectional area of the tubular member (10) smoothly increases along the tubular member (10) as seen from the fluid inlet (11) to the regulator inlet (102).

4. Flow regulating device according to claim 1, 2 or 3, wherein the pressure enhancing device (10) is arranged to increase the pressure of the fluid in the regulator inlet (102) by at least 25 percent, preferably at least 50 percent, relative to the pressure of the fluid flowing through the fluid inlet (11), wherein the pressure enhancing device (10) is preferably arranged for increasing a fluid pressure of 1.0-1.4 bar in the fluid inlet (11) to at least 1.8 bar in the regulator inlet (102), more preferably of 1.2 bar in the fluid inlet (11) to 2 bar in the regulator inlet (102).

5. Flow regulating device according to any of the preceding claims, wherein the housing (20) is tubular and further comprises a regulator segment (24) and an outlet segment (25), wherein the flow regulating element (100) is arranged in the regulator segment (24), and the outlet segment (25) defines the fluid outlet (22).

6. Flow regulating device according to claim 5, wherein the inner diameter (D₂₁, D₂₂, D₂₃) of the tubular housing (20) varies stepwise across the segments (23, 24, 25), wherein the flow regulating element (100) is snugly arranged in the flow regulator segment (24) of the tubular housing (20) and has an outer diameter exceeding the inner diameter (D₂₁) of the outlet segment (25) of the tubular housing (20), wherein the pressure enhancing device (10) is snugly arranged in the inlet segment (23) of the tubular housing (20) and has an outer diameter (D₁₃) exceeding the inner diameter (D₂₂) of the regulator segment (24).

7. Flow regulating device according to any of the preceding claims, wherein the flow regulating element (100) defines a throughflow opening (111) and is arranged to adjust the size of the throughflow opening (111) in dependence of a pressure of the fluid flowing through the flow regulating element (100) to regulate the flow rate of the fluid flowing through the fluid outlet (22).

8. Flow regulating device according to claim 7, wherein the flow regulating element (100) comprises a valve seat (109) and a resilient plate-like valve element (104) defining the throughflow opening (111) therebetween, wherein the valve element (104) is arranged movable to and from the valve seat (109) under the influence of the pressure of the fluid flowing through the flow regulating element (100) to adjust the size of the throughflow opening (111).

9. Flow regulating device according to any of the preceding claims, wherein the flow regulating element (100) is arranged to regulate the fluid flowing through the fluid outlet (22) to flow at a predefined flow rate, wherein the predefined flow rate is in the range of 5 to 15, preferably 7 to 9, litres per minute.

10. Kit of parts for a flow regulating device for regulating a fluid flow therethrough, comprising a fluid inlet for fluid to flow into the flow regulating device, a fluid outlet for the fluid to flow out of the flow regulating device, and a fluid channel extending from the fluid inlet to the fluid outlet, wherein the kit of parts comprises
- a flow regulating element (100) provided with a regulator inlet (102) and arranged to regulate a flow rate of fluid flowing therethrough, and
- a housing (20) for housing the flow limiting element (100), wherein the housing (20) comprises an inlet segment (23),
**characterised by** a pressure enhancing device (10) to be arranged in the inlet segment (23) to increase the pressure of fluid in the regulator inlet (102) relative to the pressure of fluid flowing through the inlet segment (23).

11. Irrigation system comprising a flow regulating device (1) according to any of the preceding claims 1 - 9.

12. Method of regulating a flow of fluid, comprising the steps of providing a flow regulating device (1) according to any of the preceding claims 1 - 9 and arranging the flow regulating device (1) for the fluid to flow into the fluid inlet (11) of the flow regulating device (1) and out of the fluid outlet (22) of the flow regulating device (1).

## Patentansprüche

1. Strömungsregelvorrichtung (1) zum Regeln eines Fluidstroms dahindurch, umfassend einen Fluideinlass (11), dass Fluid in die Strömungsregelvorrichtung hinein strömt, einen Fluidauslass (22), dass das Fluid aus der Strömungsregelvorrichtung heraus strömt, und einen Fluidkanal, der sich von dem Fluideinlass (11) zu dem Fluidauslass (22) erstreckt, wobei die Strömungsregelvorrichtung (1) ferner umfasst:
- ein Strömungsregelelement (100), das mit einem Reglereinlass (102) versehen und in dem Fluidkanal angeordnet ist, um eine Strömungsrate des Fluids zu regeln, das durch den Fluidauslass (22) strömt;
- ein Gehäuse (20) zum Aufnehmen des Strömungsregelelements (100), wobei das Gehäuse ein Einlasssegment (23) umfasst,
**gekennzeichnet durch** eine Druckerhöhungsvorrichtung (10), die in dem Einlasssegment (23) angeordnet ist, um den Druck des Fluids in dem Reglereinlass (102) relativ zu dem Druck des Fluids zu erhöhen, das durch den Fluideinlass (11) strömt.

2. Strömungsregelvorrichtung nach Anspruch 1, wobei die Druckerhöhungsvorrichtung ein rohrförmiges Element (10) umfasst, das ein Einlassende (11) und ein Auslassende (12) aufweist, das eine Querschnittsfläche aufweist, die größer als die Querschnittsfläche des Einlassendes (11) ist, wobei das Strömungsregelelement (100) mit dem Auslassende (12) des rohrförmigen Elements (10) fluidisch verbunden ist.

3. Strömungsregelvorrichtung nach Anspruch 2, wobei die Querschnittsfläche des rohrförmigen Elements (10) entlang des rohrförmigen Elements (10) von dem Fluideinlass (11) zu dem Reglereinlass (102) gesehen gleichmäßig zunimmt.

4. Strömungsregelvorrichtung nach Anspruch 1, 2 oder 3, wobei die Druckerhöhungsvorrichtung (10) angeordnet ist, um den Druck des Fluids in dem Reglereinlass (102) um mindestens 25 Prozent, vorzugsweise mindestens 50 Prozent, relativ zu dem Druck des Fluids zu erhöhen, das durch den Fluideinlass (11) strömt, wobei die Druckerhöhungsvorrichtung (10) vorzugsweise zum Erhöhen eines Fluiddrucks von 1,0-1,4 Bar in dem Fluideinlass (11) auf mindestens 1,8 Bar in dem Reglereinlass (102), stärker bevorzugt von 1,2 Bar in dem Fluideinlass (11) auf 2 Bar in dem Reglereinlass (102) angeordnet ist.

5. Strömungsregelvorrichtung nach einem der vorstehenden Ansprüche, wobei das Gehäuse (20) rohrförmig ist und ferner ein Reglersegment (24) und ein Auslasssegment (25) umfasst, wobei das Strömungsregelelement (100) in dem Reglersegment (24) angeordnet ist und das Auslasssegment (25) den Fluidauslass (22) definiert.

6. Strömungsregelvorrichtung nach Anspruch 5, wobei der Innendurchmesser (D₂₁, D₂₂, D₂₃) des rohrförmigen Gehäuses (20) über die Segmente (23, 24, 25) stufenweise variiert, wobei das Strömungsregelelement (100) eng in dem Strömungsreglersegment (24) des rohrförmigen Gehäuses (20) angeordnet ist und einen Außendurchmesser aufweist, der den Innendurchmesser (D₂₁) des Auslasssegments (25) des rohrförmigen Gehäuses (20) überschreitet, wobei die Druckerhöhungsvorrichtung (10) eng in dem Einlasssegment (23) des rohrförmigen Gehäuses (20) angeordnet ist und einen Außendurchmesser (D₁₃) aufweist, der den Innendurchmesser (D₂₂) des Reglersegments (24) überschreitet.

7. Strömungsregelvorrichtung nach einem der vorstehenden Ansprüche, wobei das Strömungsregelelement (100) eine Durchströmungsöffnung (111) definiert und angeordnet ist, um die Größe der Durchströmungsöffnung (111) in Abhängigkeit von einem Druck des Fluids einzustellen, das durch das Strömungsregelelement (100) strömt, um die Strömungsrate des Fluids zu regeln, das durch den Fluidauslass (22) strömt.

8. Strömungsregelvorrichtung nach Anspruch 7, wobei das Strömungsregelelement (100) einen Ventilsitz (109) und ein elastisches plattenartiges Ventilelement (104) umfasst, das dazwischen die Durchströmungsöffnung (111) definiert, wobei das Ventilelement (104) unter dem Einfluss des Drucks des Fluids, das durch das Strömungsregelelement (100) strömt, zu und von dem Ventilsitz (109) bewegbar ist, um die Größe der Durchströmungsöffnung (111) einzustellen.

9. Strömungsregelvorrichtung nach einem der vorstehenden Ansprüche, wobei das Strömungsregelelement (100) angeordnet ist, um das Fluid, das durch den Fluidauslass (22) strömt, auf eine vordefinierte Strömungsrate zu regeln, wobei die vordefinierte Strömungsrate in dem Bereich von 5 bis 15, vorzugsweise 7 bis 9 Litern pro Minute liegt.

10. Kit von Teilen für eine Strömungsregelvorrichtung zum Regeln eines Fluidstroms dahindurch, umfassend einen Fluideinlass, dass Fluid in die Strömungsregelvorrichtung hinein strömt, einen Fluidauslass, dass das Fluid aus der Strömungsregelvorrichtung heraus strömt, und einen Fluidkanal, der sich von dem Fluideinlass zu dem Fluidauslass erstreckt, wobei das Kit von Teilen umfasst
- ein Strömungsregelelement (100), das mit einem Reglereinlass (102) versehen und angeordnet ist, um eine Strömungsrate des Fluids zu regeln, das dahindurch strömt, und
- ein Gehäuse (20) zum Aufnehmen des Strömungsbegrenzungselements (100), wobei das Gehäuse (20) ein Einlasssegment (23) umfasst,
**gekennzeichnet durch** eine Druckerhöhungsvorrichtung (10), die in dem Einlasssegment (23) anzuordnen ist, um den Druck von Fluid in dem Reglereinlass (102) relativ zu dem Druck von Fluid zu erhöhen, das durch das Einlasssegment (23) strömt.

11. Bewässerungssystem, umfassend eine Strömungsregelvorrichtung (1) nach einem der vorstehenden Ansprüche 1 bis 9.

12. Verfahren zum Regeln eines Stroms von Fluid, umfassend die Schritte des Bereitstellens einer Strömungsregelvorrichtung (1) nach einem der vorstehenden Ansprüche 1 bis 9 und des Anordnens der Strömungsregelvorrichtung (1), dass das Fluid in den Fluideinlass (11) der Strömungsregelvorrichtung (1) hinein und aus dem Fluidauslass (22) der Strömungsregelvorrichtung (1) heraus strömt.

## Revendications

1. Dispositif de régulation d'écoulement (1) pour réguler un écoulement de fluide à travers celui-ci, comprenant une entrée de fluide (11) pour que le fluide s'écoule dans le dispositif de régulation d'écoulement, une sortie de fluide (22) pour que le fluide s'écoule hors du dispositif de régulation d'écoulement, et un canal de fluide s'étendant de l'entrée de fluide (11) à la sortie de fluide (22), dans lequel le dispositif de régulation d'écoulement (1) comprend en outre :
- un élément de régulation d'écoulement (100) pourvu d'une entrée régulateur (102) et agencé dans le canal de fluide pour réguler un débit du fluide s'écoulant à travers la sortie de fluide (22) ;
- un boîtier (20) pour loger l'élément de régulation d'écoulement (100), dans lequel le boîtier comprend un segment d'entrée (23),
**caractérisé par** un dispositif d'amélioration de pression (10) agencé dans le segment d'entrée (23) pour augmenter la pression du fluide dans l'entrée régulateur (102) par rapport à la pression du fluide s'écoulant à travers l'entrée de fluide (11).

2. Dispositif de régulation d'écoulement selon la revendication 1, dans lequel le dispositif d'amélioration de pression comprend un élément tubulaire (10) ayant une extrémité d'entrée (11) et une extrémité de sortie (12) ayant une surface de section transversale dépassant la surface de section transversale de l'extrémité d'entrée (11), dans lequel l'élément de régulation d'écoulement (100) est relié de manière fluidique à l'extrémité de sortie (12) de l'élément tubulaire (10).

3. Dispositif de régulation d'écoulement selon la revendication 2, dans lequel la surface de section transversale de l'élément tubulaire (10) augmente progressivement le long de l'élément tubulaire (10) vu de l'entrée de fluide (11) jusqu'à l'entrée régulateur (102).

4. Dispositif de régulation d'écoulement selon la revendication 1, 2 ou 3, dans lequel le dispositif d'amélioration de pression (10) est agencé pour augmenter la pression du fluide dans l'entrée régulateur (102) d'au moins 25 pour cent, de préférence d'au moins 50 pour cent, par rapport à la pression du fluide s'écoulant à travers l'entrée de fluide (11), dans lequel le dispositif d'amélioration de pression (10) est de préférence agencé pour augmenter une pression de fluide de 1,0-1,4 bar dans l'entrée de fluide (11) à au moins 1,8 bar dans l'entrée régulateur (102), plus préférablement de 1,2 bar dans l'entrée de fluide (11) à 2 bar dans l'entrée régulateur (102).

5. Dispositif de régulation d'écoulement selon l'une quelconque des revendications précédentes, dans lequel le boîtier (20) est tubulaire et comprend en outre un segment régulateur (24) et un segment de sortie (25), dans lequel l'élément de régulation d'écoulement (100) est agencé dans le segment régulateur (24), et le segment de sortie (25) définit la sortie de fluide (22).

6. Dispositif de régulation d'écoulement selon la revendication 5, dans lequel le diamètre intérieur (D₂₁, D₂₂, D₂₃) du boîtier tubulaire (20) varie par étapes à travers les segments (23, 24, 25), dans lequel l'élément de régulation d'écoulement (100) est agencé de manière ajustée dans le segment régulateur d'écoulement (24) du boîtier tubulaire (20) et a un diamètre extérieur dépassant le diamètre intérieur (D₂₁) du segment de sortie (25) du boîtier tubulaire (20), dans lequel le dispositif d'amélioration de pression (10) est agencé de manière ajustée dans le segment d'entrée (23) du boîtier tubulaire (20) et a un diamètre extérieur (D₁₃) dépassant le diamètre intérieur (D₂₂) du segment régulateur (24).

7. Dispositif de régulation d'écoulement selon l'une quelconque des revendications précédentes, dans lequel l'élément de régulation d'écoulement (100) définit une ouverture de circulation d'écoulement (111) et est agencé pour ajuster la taille de l'ouverture de circulation d'écoulement (111) en fonction d'une pression du fluide s'écoulant à travers l'élément de régulation d'écoulement (100) pour réguler le débit du fluide s'écoulant à travers la sortie de fluide (22).

8. Dispositif de régulation d'écoulement selon la revendication 7, dans lequel l'élément de régulation d'écoulement (100) comprend un siège de soupape (109) et un élément de soupape résilient en forme de plaque (104) définissant l'ouverture de circulation d'écoulement (111) entre eux, dans lequel l'élément de soupape (104) est agencé de manière déplaçable vers et depuis le siège de soupape (109) sous l'influence de la pression du fluide s'écoulant à travers l'élément de régulation d'écoulement (100) pour ajuster la taille de l'ouverture de circulation d'écoulement (111).

9. Dispositif de régulation d'écoulement selon l'une quelconque des revendications précédentes, dans lequel l'élément de régulation d'écoulement (100) est agencé pour réguler le fluide s'écoulant à travers la sortie de fluide (22) pour qu'il s'écoule à un débit prédéfini, dans lequel le débit prédéfini est dans la plage de 5 à 15, de préférence entre 7 et 9, litres par minute.

10. Kit de parties pour un dispositif de régulation d'écoulement pour réguler un écoulement de fluide à travers celui-ci, comprenant une entrée de fluide pour que le fluide s'écoule dans le dispositif de régulation d'écoulement, une sortie de fluide pour que le fluide s'écoule hors du dispositif de régulation d'écoulement, et un canal de fluide s'étendant de l'entrée de fluide à la sortie de fluide, dans lequel le kit de parties comprend
- un élément de régulation d'écoulement (100) pourvu d'une entrée régulateur (102) et agencé pour réguler un débit de fluide s'écoulant à travers celle-ci, et
- un boîtier (20) pour loger l'élément de limitation d'écoulement (100), dans lequel le boîtier (20) comprend un segment d'entrée (23),
**caractérisé par** un dispositif d'amélioration de pression (10) agencé dans le segment d'entrée (23) pour augmenter la pression du fluide dans l'entrée régulateur (102) par rapport à la pression du fluide s'écoulant à travers le segment d'entrée (23).

11. Système d'irrigation comprenant un dispositif de régulation d'écoulement (1) selon l'une quelconque des revendications précédentes 1 à 9.

12. Procédé pour réguler un écoulement de fluide, comprenant les étapes consistant à fournir un dispositif de régulation d'écoulement (1) selon l'une quelconque des revendications précédentes 1 à 9 et disposer le dispositif de régulation d'écoulement (1) pour que le fluide s'écoule dans l'entrée de fluide (11) du dispositif de régulation d'écoulement (1) et hors de la sortie de fluide (22) du dispositif de régulation d'écoulement (1).
